# EUROPÄISCHE PATENTANMELDUNG

(11) **EP 2 731 323 A2**
(43) Veröffentlichungstag der Anmeldung: **14.05.2014**
(21) Anmeldenummer: 13191634.8
(22) Anmeldetag: 05.11.2013
(51) Int. Cl.: H04N 1/32

(54) **Verfahren zum Individualisieren einer elektronischen Bilddatei, Bilddatei, Programmprodukt und Datenverarbeitungsanlage**

(30) Priorität: 13.11.2012 DE 102012110921
(71) Anmelder: Glockner, Andreas, 66133 Saarbrücken-Scheidt (DE)
(72) Erfinder: Glockner, Andreas, 66133 Saarbrücken-Scheidt (DE)
(74) Vertreter: Träger, Denis

(57) **Zusammenfassung**

Autogrammkarten 10 mit Fotos von Sportlern dienen Fans dazu, originale Unterschriften ihrer Idole zu sammeln. Die zu erwerbenden, unbeschrifteten Autogrammkarten 10 müssen daher von den Fans praktisch jederzeit mitgeführt werden, um beim zufälligen Treffen eines Sportlers eine Unterschrift 18 auf der entsprechenden Karte einholen zu können. Außerdem ist ein entsprechender ebenfalls aufwändiger Schutz gegen Beschädigungen vorzusehen.

Die Erfindung bietet ein Verfahren und eine Software für ein mobiles Endgerät, wie ein Mobiltelefon 22, womit eine praktisch jederzeitige und komfortable Einholung von Autogrammen möglich ist. Die Autogrammkarten 10 werden in Form von Bilddateien 26 zur Verfügung und lassen sich mittels eines digitalen Identitätszeichen des abgebildeten Sportlers zu einem Unikat umwandeln.

## Beschreibung

Die Erfindung betrifft ein Verfahren zum Individualisieren einer elektronischen Bilddatei gemäß dem Oberbegriff des Anspruchs 1. Außerdem betrifft die Erfindung ein Programmprodukt zur Ausführung des Verfahrens gemäß dem Oberbegriff des Anspruchs 11. Weiterhin betrifft die Erfindung eine Datenverarbeitungsanlage zur Ausführung der Verfahrens gemäß dem Oberbegriff des Anspruchs 12. Des Weiteren betrifft die Erfindung eine Bilddatei gemäß dem Oberbegriff des Anspruchs 13.

Unter Sportfans und insbesondere beim Fußball stellt das Sammeln von Autogrammkarten mehr oder weniger bekannter oder berühmter Sportler eine beliebte Freizeitbeschäftigung dar. Die Fans sammeln zumeist nicht nur einzelne Autogrammkarten, sondern legen häufig Sammlungen von Autogrammkarten ganzer Sportvereine an und tauschen sich mit anderen Fans über dieses Hobby aus. Bei diesen Gelegenheiten findet auch ein tatsächlicher Tausch von typischerweise bereits unterschriebenen Autogrammkarten statt. Dies bietet Fans eine Möglichkeit, ihre Autogrammserien zu vervollständigen, ohne jedes Autogramm eigenhändig eingeholt zu haben.

Die eigentlichen Autogrammkarten werden oftmals vom jeweiligen Sportverein des Sportlers zum Verkauf angeboten. Ein Fan erwirbt eine oder mehrere Karten mit je einem Bild eines Sportlers. Sobald der Fan auf einen Sportler trifft, holt er die Autogrammkarte mit dem Bild des Sportlers oder auch einer gesamten Mannschaft hervor und bittet diesen, die Karte zu unterzeichnen. Somit wird aus einer massenhaft verkauften Autogrammkarte ein Unikat beziehungsweise Einzelstück, das zumindest in Sammlerkreisen durchaus einen gewissen Wert darstellt.

Nachteilig bei dieser Art der "Autogrammjagd" ist der Umstand, das man als Fan ständig einen unbestimmten Vorrat an verschiedenen unbeschrifteten Autogrammkarten bei sich tragen muss. Es ist nämlich in er Regel nicht vorhersehbar ist, wann und zu welcher Gelegenheit man auf einen Sportler trifft, den man um ein Autogramm bitten kann. Neben den Karten sollte ebenso ein dafür geeigneter Stift griffbereit sein, was sich oftmals ebenfalls als Problem erweist.

Die Aufgabe der Erfindung besteht darin, dem Fan eine Möglichkeit zu verschaffen, auf einfache Weise und mit wenig Aufwand jederzeit Autogramme entgegennehmen zu können. Es sollte insbesondere vermieden werden, dass ständig die entsprechenden Karten beziehungsweise ein passender Stift mitgeführt werden müssen.

Die der Erfindung zugrundeliegende Aufgabe wird durch ein Verfahren zum Individualisieren einer elektronischen Bilddatei mit den Merkmalen des Anspruchs 1 gelöst. Demnach wird einer Bilddatei, die ein Foto einer Person enthält, ein Identitätszeichen, vorzugsweise ein oder mehrere Identitätszeichen hinzugefügt. Das Individualisieren erfolgt vorzugsweise auf einem insbesondere mobilen Endgerät. Das hinzugefügte Identitätszeichen führt dazu, dass die Bilddatei zu einem Unikat wird, es sich also nunmehr um ein Einzelstück handelt, also dass diese individualisierte Karte grundsätzlich nur einmal existiert. Die Bilddatei wird beispielsweise von einem Anbieter, wie insbesondere einem Sportverein, zur Verfügung gestellt. Insbesondere kann sie dort käuflich erworben werden. Damit hat ein Fan die Möglichkeit, eine entsprechende Bilddatei als Pendant zu einer klassischen Autogrammkarte zu erwerben. Die Bilddatei wird dann mit einem individuell erstellten Identitätszeichen des abgebildeten Sportiers versehen und damit erst zum Unikat.

Vorzugsweise wird als Identitätszeichen ein graphisch erfassbares und/oder darstellbares Merkmal der Person verwendet. Damit ist eine Überprüfbarkeit oder gleichzeitig gute Verarbeitbarkeit sichergestellt. Das verwendete Identitätszeichen beziehungsweise Merkmal ist insbesondere zur Identifikation der Person geeignet. Es handelt sich also insbesondere um ein sogenanntes individuelles Merkmal der Person. Das Identitätszeichen wird insbesondere digitalisiert, wobei vorzugsweise ein Schutz gegen Fälschungen sichergestellt wird, vorzugsweise durch Einbringen einer digitalen Markierung, wie einem Wasserzeichen, einer Prüfsumme, eines Codes und/oder ähnlichem.

Bei dem Identitätszeichen kann es sich insbesondere um eine Unterschrift, einen Fingerabdruck, eine Irisaufnahme eines Auges und/oder auch ein Foto handeln. Die Art des Identitätszeichens beziehungsweise Merkmals hängt vorzugsweise unter anderem mit der Art der Vorrichtung zusammen, die zur Eingabe zur Verfügung steht. So können insbesondere ein berührungsempfindliches Sensorfeld, wie beispielsweise ein Touchscreen, ein Grafiktablett und/oder ein Fingerabdruckscanner, aber auch andere Eingabegeräte, wie beispielsweise ein Irisscanner oder eine Kamera, verwendet werden. Die Eingabevorrichtung ist vorzugsweise mit einem tragbaren Gerät verbunden, bildet einen Teil eines solchen beziehungsweise ist in ein solches integriert. Bevorzugt handelt es sich bei dem tragbaren Gerät beziehungsweise dem mobilen Endgerät um einen tragbaren Computer, ein Tablet und/oder ein Mobiltelefon. Bevorzugt wird als Identitätszeichen der Person eine insbesondere handschriftlich abgegebene Unterschrift, ein Fingerabdruck, eine Irisaufnahme, ein Foto und/oder ein ähnliches individuelles Merkmal der Person verwendet.

Bevorzugt wird das Identitätszeichen dauerhaft mit der Bilddatei verknüpft beziehungsweise verbunden. Dies geschieht insbesondere irreversibel, indem beispielsweise die Bilddaten, also konkret Bildpunkte der Bilddatei modifiziert, also insbesondere zumindest teilweise durch Bildpunkte des Identitätszeichens ersetzt werden. Alternativ kann dies aber auch reversibel erfolgen, wobei nämlich das Identitätszeichen ohne Änderung der eigentlichen Bilddaten in die Bilddatei eingebettet beziehungsweise mit dieser verknüpft wird, beispielsweise als zweite Bildebene.

Der Bilddatei werden vorzugsweise weitere Informationen zugeordnet beziehungsweise in diese eingebettet. So können beispielsweise ein Logo und/oder eine Internetadresse eines Sportvereins, ebenso wie persönliche Daten des dargestellten Sportlers hinzugefügt werden. Weiterhin ist es beispielsweise möglich, ein gemeinsames Foto des Autogramme sammelnden Fans mit dem auf dem Bild dargestellten Sportler einzubetten. Hiermit kann bei direkter Aufnahme des Fotos die Authentizität der Situation unterstrichen werden. Ein solches Foto kann direkt mit dem mobilen Endgerät, insbesondere mittels einer Kamera erstellt werden. Vorzugsweise sind darauf Fan und Sportler abgebildet. Das Foto wird insbesondere mit der Bilddatei verbunden oder in die Bilddatei eingebettet, beispielsweise durch Ersetzen von Pixeln beziehungsweise Bildpunkten.

Bevorzugt kann die Bilddatei mit einer digitalen Markierung versehen werden, um sie eindeutig einer Person, beispielsweise einem Benutzer, einem Benutzerkonto oder auch einem Eigentümer, zuzuordnen. Dies kann zum Beispiel geschehen, indem einem Fan ein Kunden- und/oder Benutzerkonto beim Anbieter zugewiesen wird. Die vom Fan erworbenen Bilddateien werden dann mittels einer digitalen Markierung mit diesem Konto verknüpft. Als digitale Markierung kann insbesondere ein Wasserzeichen eingesetzt werden. Hierbei handelt es sich vorzugsweise um ein sogenanntes digitales Wasserzeichen, das dazu insbesondere in die Bilddatei eingebettet ist. Ein solches Wasserzeichen zeichnet sich dadurch aus, dass es beim visuellen Betrachten des Bildes nicht oder praktisch nicht sichtbar ist. Es kann allerdings durch digitale Decodierung sichtbar gemacht werden, insbesondere mittels eines Computers. Ebenso kann es sich beispielsweise um einen öffentlichen Schlüssel handeln, der zu einem im Benutzerkonto hinterlegten privaten Schlüssel passt. Dieser Schlüssel kann in die Datei eingebettet sein beziehungsweise auch in Form eines Wasserzeichens oder ähnlichem hinterlegt werden. Alternativ kann aus einem Teil der personenbezogenen Daten, wie einem Benutzerkennwort, eine Prüfsumme, wie beispielsweise ein Hashwert, ermittelt werden. Diese Prüfsummer wird vorzugsweise in die Bilddatei eingebettet. Zum Tauschen der Bilddatei mit anderen Fans lassen sich die digitalen Markierungen von einem Benutzerkonto auf ein anderes übertragen. Alternativ können auch Markierungen geändert werden. Die Zugriffsrechte wechseln dabei vorzugsweise von einem Kundenkontoinhaber beziehungsweise Fan zu einem anderen.

Vorzugsweise wird das Identitätszeichen direkt beziehungsweise unmittelbar eingelesen. Dies bedeutet vorzugsweise, dass das insbesondere digitalisierte Identitätszeichen eingelesen wird, um es praktisch insbesondere auf demselben Endgerät umgehend oder sofort mit der Bilddatei zu verknüpfen. Die Verknüpfung oder Einbettung wird aber zumindest in zeitlicher Nähe und/oder ohne umfangreiche Zwischenschritte erfolgen. Für den Fall, daß ein Fan das Identitätszeichen einer bestimmten Person nicht direkt erhalten kann, besteht vorzugsweise die Möglichkeit, ein von der Person insbesondere vorab abgegebenes Identitätszeichen von einem Anbieter zu erwerben, um es mit der Bilddatei zu verknüpfen. Alternativ kann das Identitätszeichen insbesondere auch durch eine vertrauenswürdige Stelle an einem anderen Ort aufgezeichnet werden, um es dann an das Endgerät zur Verknüpfung mit beziehungsweise Einbettung in die Bilddatei zu übertragen, insbesondere über ein Netzwerk. Vorzugsweise sind übertragene Identitätszeichen mit einem digitalen Markierung, wie beispielsweise einem Wasserzeichen und/oder einer Prüfsumme, zur Sicherstellung der Echtheit versehen.

Die Bilddateien werden bevorzugt in einer Datenbank gespeichert und/oder vorgehalten. Eine Bilddatei wird aus der Datenbank vom Fan gegebenenfalls nach käuflichem Erwerb auf ein dafür vorgesehenes Gerät, insbesondere ein vorzugsweise mobiles Endgerät heruntergeladen, vorzugsweise über ein Netzwerk und/oder ein Speichermedium. Auf dem Endgerät wird die Bilddatei ebenso in einer (lokalen) Datenbank abgelegt, um im Bedarfsfall zur Anzeige gebracht zu werden. Zusätzlich zur Bilddatei werden in der Datenbank beziehungsweise den Datenbanken vorzugsweise Informationen zum Identitätszeichen und/oder zur digitalen Markierung der Bilddatei abgelegt. Diese Informationen werden insbesondere zwischen den Datenbanken ausgetauscht. Somit wird sichergestellt, dass die Bilddatei in allen Datenbanken, also sowohl beim Anbieter als auch beim Fan, denselben Status hat. Außerdem besteht so eine Sicherungskopie. Bevorzugt wird eine Freigabe der Bilddatei zur Individualisierung eingeholt. Dies bedeutet, dass die Datei vorzugsweise vor einer Veränderung insbesondere bei einer Datenbank über ein Netzwerk und/oder ein Speichermedium freigegeben werden muss, um die Individualisierung vornehmen zu können. Damit wird sichergestellt, dass es sich um Originale der Bilddateien handelt. Die Freigabe kann vorzugsweise auch über eine spezielle Prüfsumme oder andere Merkmale sichergestellt werden.

Für die Ausführung des Verfahrens wird bevorzugt eine Software verwendet. Diese Software ist insbesondere in der Lage ist, Bilddaten über ein Netzwerk und/oder ein Speichermedium aus einer externen Datenbank und/oder Zertifizierungsstelle zu laden, diese zu verwalten und/oder zu manipulieren. Die Software enthält bevorzugt eine eigene Datenbank, in der vorzugsweise die aus einer externen Datenbank geladenen Daten und/oder lokal hinzugefügte Daten gespeichert und/oder vorgehalten werden. In der eigenen (lokalen) Datenbank speichert die Software vorzugsweise die mit ihr durchgeführten Veränderungen an der Bilddatei, insbesondere die Verknüpfung mit einem Identitätszeichen. Weiterhin synchronisiert die Software die eigene Datenbank automatisch oder auf Veranlassung eines Anwenders mit der externen Datenbank. Auf dem Endgerät, welches insbesondere zur Ausführung des Verfahrens verwendet wird, ist die Software in einem internen Speicher oder alternativ auf einem externer Speicher, wie beispielsweise einer SD-Karte oder ein USB-Stick, installiert.

Es ist weiterhin denkbar, das die Bilddatei, anstatt aus einer externen Datenbank geladen zu werden, bereits im eigenen Datenbestand der Software integriert ist. Diese Ausführung ermöglicht es einem Fan insbesondere, neben einzeklnen Autogrammkarten beziehungsweise Bilddateien auch eine gesamte Serie zu erwerben. Beispielsweise kann damit eine Grundausstattung vorzugsweise mit den Autogrammkarten eines Vereins sichergestellt werden.

Die der Erfindung zugrundeliegende Aufgabe wird außerdem durch eine Bilddatei mit den Merkmalen des Anspruchs 12 gelöst. Demnach enthält die Bilddatei zumindest ein Foto wenigstens einer Person. Die Individualisierung der Bilddatei, insbesondere durch Hinzufügen eines Identitätszeichens einer Person, erfolgt vorzugsweise gemäß dem oben beschriebenen Verfahren. Durch die Verbindung mit wenigstens einem Identitätszeichen der auf ihr abgebildeten Person wird die Bilddatei in ein Unikat, also ein Einzelstück gewandelt. Bei dem Identitätszeichen handelt es sich insbesondere um eine vorzugsweise handschriftliche Unterschrift, eine Signatur, einen Fingerabdruck und/oder ein Foto. Das Identitätszeichen ist vorzugsweise ein digitalisiertes Abbild eines individuellen, also insbesondere identifizierenden Merkmals der Person. Bevorzugt ist das Identitätszeichen dauerhaft mit der Bilddatei verbunden, insbesondere in die Bilddatei eingebettet. Insbesondere werden beziehungsweise sind Teile der Bilddatei, vorzugsweise einzelne Bildpunkte durch entsprechende Bildpunkte der Identitätszeichens ersetzt. Die Verknüpfung des Identitätszeichens mit der Bilddatei ist vorzugsweise derart ausgebildet, dass das Identitätszeichen entweder in die Bilddatei eingebettet ist, beispielsweise als weitere Ebene, oder das einzelne Bildpunkte der Bilddatei durch Bildpunkte des Identitätszeichens ersetzt worden sind.

Weiterhin enthält die Bilddatei insbesondere eine digitale Markierung. Mittels der digitalen Markierung kann die Bilddatei eindeutig einem Computersystem, einem Benutzerkonto und/oder auch einer Person, wie beispielsweise einem Eigentümer, zugeordnet werden. Diese Markierung kann beispielsweise in Form eines digitalen Wasserzeichens, welches vorzugsweise untrennbar mit der Bilddatei verknüpft ist, ausgebildet sein. Ebenso kann die Bilddatei auch mit einem öffentlichen Schlüssel verknüpft sein, wobei der dazugehörige private Schlüssel vorzugsweise bei einem Anbieter, insbesondere in einer externen Datenbank, gespeichert ist. Als weitere Möglichkeit kann die Bilddatei mit einer Prüfsumme, wie beispielsweise einem Hashwert eines Kennwortes, verknüpft sein, welches dem Benutzerkonto bei einem Anbieter zugeordnet ist. Weitere digitale Markierungen oder Kombinationen daraus sind ebenfalls denkbar.

Die Aufgabe wird außerdem durch ein Programmprodukt beziehungsweise ein Computerprogrammprodukt zur Durchführung eines Verfahrens gemäß den obigen Ausführungen gelöst. Das Programmprodukt läuft dazu auf einer programmtechnisch eingerichteten Datenverarbeitungsanlage ab, also insbesondere auf einem mobilen Computersystem, einem Mobiltelefon, einem Laptop, einem Tabletcomputer und/oder dergleichen.

Schließlich wird die Aufgabe der Erfindung gelöst durch eine Datenverarbeitungsanlage zur Ausführung des beschriebenen Verfahrens mit einem in einem der Datenverarbeitungsanlage zugeordneten Speicher hinterlegten Programmprodukt gemäß obigen Ausführungen.

Weitere bevorzugte Merkmale und Ausführungen der Erfindung sind im Übrigen den Unteransprüchen zu entnehmen.

Im Folgenden werden bevorzugte Ausführungen der Erfindung anhand der Figuren der Zeichnung näher beschrieben. In dieser zeigen:
Fig. 1 Einen Stapel herkömmlicher Autogrammkarten gemäß dem Stand der Technik,
Fig. 2 eine unterschriebene digitale Autogrammkarte mit Name und Logo,
Fig. 3 ein tragbares Gerät mit einer digital unterschriebenen Bilddatei,
Fig. 4 eine Bilddatei mit eingebettetem Wasserzeichen und digitaler Signatur,
Fig. 5 das Herunterladen einer Bilddatei auf ein mobiles Endgerät, und
Fig. 6 das Verknüpfen einer Bilddatei mit einem Identitätszeichen aus einer Datenbank.

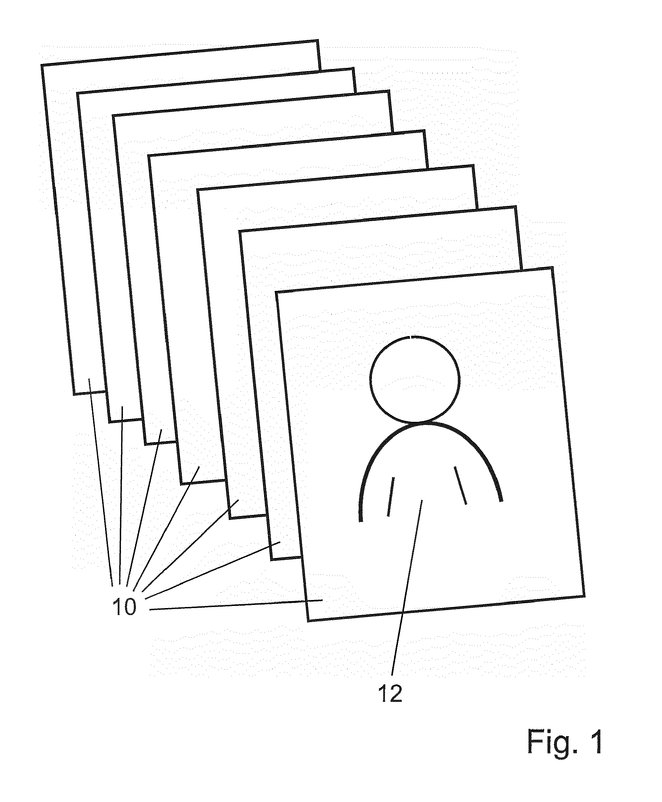

Fig. 1 zeigt einen Stapel herkömmlicher Autogrammkarten 10. Diese sind üblicherweise aus Papier, Pappe oder Kunststoff und mit einem Foto 12 einer Person oder mehrerer Personen, also insbesondere eines Sportlers oder mehrerer Sportler, bedruckt. Ein Fan kauft sich zunächst typischerweise bei einem Fanshop einzelne Autogrammkarten 10 oder ganze Serien derselben, beispielsweise einer gesamten Mannschaft. Diese Autogrammkarten 10 lässt sie sich von den darauf abgebildeten Sportlern unterschreiben.

Da die Karten 10, vor allem nachdem sie signiert wurden, einen zumindest ideell hohen Wert darstellen, ist es notwendig, sie vor Beschädigung oder Verschmutzung zu schützen. Da ein Fan jederzeit auf einen Sportler treffen kann, den er um ein Autogramm in Form einer Unterschrift 18 bitten könnte, muss er zur Wahrung der Chancen alle seine Autogrammkarten 10 ständig mit sich führen. Außerdem ist zum Unterzeichnen ein Stift 20 erforderlich, der in der Regel ebenfalls mitzuführen ist. Das Mitführen und die pflegliche Behandlung der Karten 10 ist aufwändig. Üblicherweise trägt ein Fan daher nur eine kleine Auswahl der wahrscheinlich in Betracht kommenden Autogrammkarten 10 beispielsweise bei einem Fußballspiel seines Lieblingsvereins bei sich. Er läuft so aber Gefahr, Autogramme zufällig anwesender Sportler zu verpassen. Zum Schutz der Autogrammkarten 10 gegen Beschädigungen dienen zumeist spezielle Hüllen, Kartons, Plastikbehältnisse oder -tüten, Einschlagpapiere, oder ähnliches.

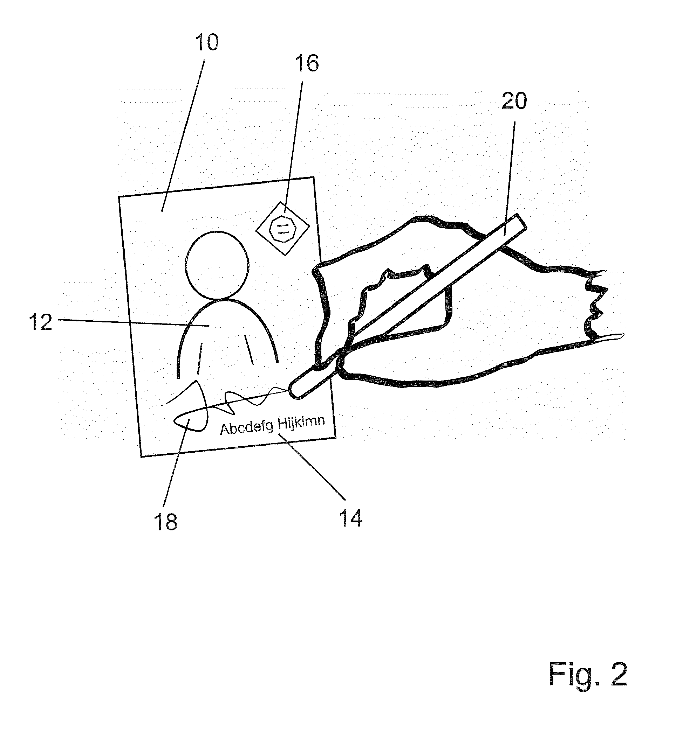

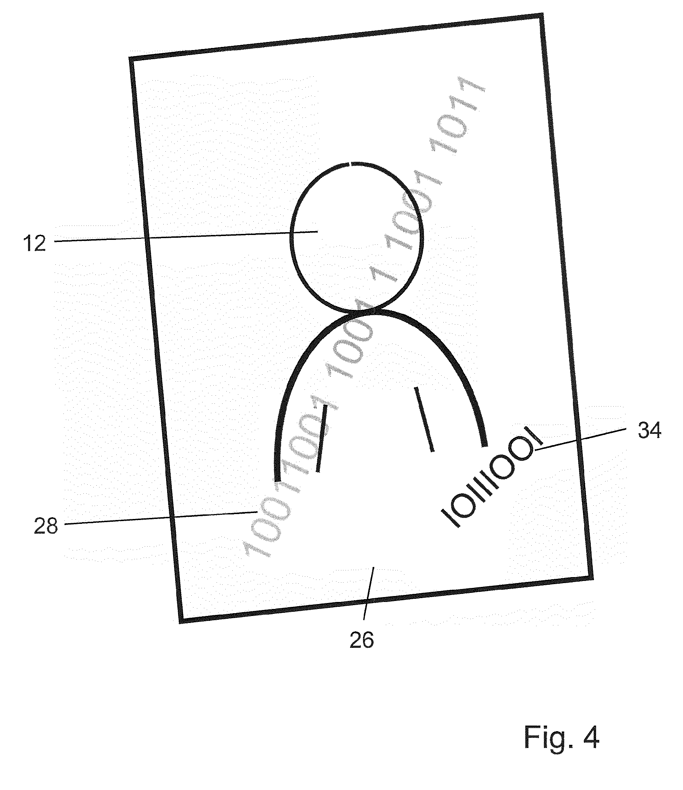

Die Fig. 2 bis 6 zeigen erfindungsgemäße Lösungen des Problems.

In Fig. 2 ist beispielhaft eine digitale Autogrammkarte 10 gezeigt. Diese umfasst eine beziehungsweise besteht aus einer Bilddatei 26, die wiederum ein Foto 12 des Sportlers als abgebildeter Person umfasst. Zusätzlich können noch weitere Informationen in der Bilddatei 26 vorhanden sein, wie persönliche Daten des abgebildeten Sportlers, wie dessen Namen 14, ein Logo 16, wie beispielsweise ein Vereinslogo, oder ähnliches. Dies ist beispielsweise ebenfalls in Fig. 2 zu sehen.

Diese Bilddatei 26 erhält der Fan in der Regel ohne Identitätszeichen des Sportlers, also ohne eine Unterschrift 18. Diese Unterschrift 18 muss sich der Fan wie bei klassischen Autogrammkarten 10 in der Regel direkt beim Sportler besorgen. Die Bilddatei wird dann mit einer digitalisierten Unterschrift 18 des Sportlers als Identitätszeichen versehen, also signiert.

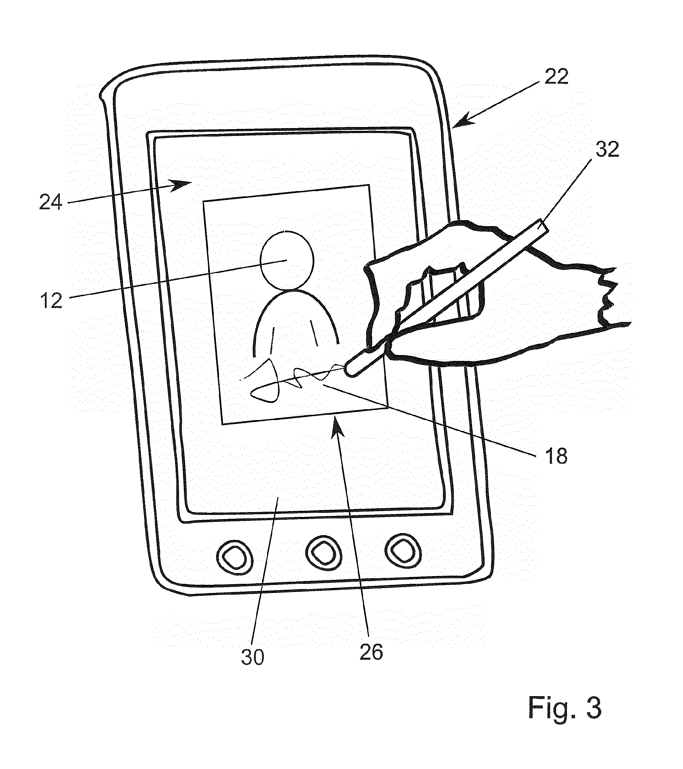

Dies erfolgt erfindungsgemäß per Software beziehungsweise mittels eines Computers. Dazu ist in Fig. 3 ein tragbares Endgerät (als Computer) abgebildet, konkret ein Mobiltelefon 22. Dabei handelt es sich um ein hinreichend leistungsfähiges Smartphone zur Ausführung spezieller Software, umgangssprachlich sogenannten "Apps". Auf dem Mobiltelefon 22 ist erfindungsgemäße eine spezielle Software, ein Programm 24, installiert. Das erfindungsgemäße Programm 24 ist auf dem Mobiltelefon 22 lauffähig.

Das Programm 24 ist in der Lage, spezielle Bilddateien 26 als digitale Varianten von Autogrammkarten 10 darzustellen. Diese Bilddateien 26 beinhalten ein Foto 12 wenigstens einer Person, nämlich in der Regel eines Sportlers oder mehrerer Sportler oder sogar einer ganze Mannschaft. Die Bilddateien 26 sind beispielsweise beim Verein des Sportlers, beispielsweise im Fanshop käuflich zu erwerben. Zunächst handelt es sich dabei um eine wie bei den klassischen Autogrammkarten 10 auch um eine in vielfacher Ausfertigung hergestellte Massenware. Allenfalls ein Echtheitszertifikat einer gekauften Bilddatei 26 ist zur Überprüfung durch die Software vorhanden. Hierzu kann beispielsweise eine digitale Signatur in Form eines digitalen Wasserzeichens 28 oder ähnlichem vorgesehen sein.

Als ein Kernmerkmal weist das Programm 24 eine Funktion auf, mit der die Bilddatei 26 zu einer individuellen Bilddatei 26, einem Unikat beziehungsweise einem Einzelstück umgewandelt werden kann. Dazu wird ein Identitätszeichen einer Person, nämlich konkret der auf dem Foto abgebildeten Person, eingelesen und mit der Bilddatei 26 verbunden.

Hier ist in Fig. 3 beispielhaft das Eingeben einer Unterschrift 18 auf einem berührungsempfidlichen Bildschirms, einem Touchscreen 30 des Mobiltelefons 22 gezeigt. Dazu wird hier mittels eines speziellen Eingabestifts 32 eine Unterschrift in einem entsprechenden Bereich der auf dem Bildschirm 30 als dargestellten Bilddatei 26 sozusagen als virtueller Autogrammkarte 10 geleistet. Indem dies durch den Sportler selber erfolgt, erhält die unterschriebene Bilddatei 26 ein individuelle Note als Unikat.

Die somit digitalisierte Unterschrift 18 wird als graphisch darstellbares Objekt mit der Bilddatei 26 verbunden. Im vorliegenden Fall wird die Unterschrift 18 in die Bilddatei 26 derart eingebettet, dass ein Ersetzen von Bildpunkten der Bilddatei 26 durch diejenigen der Unterschrift 18 erfolgt. Damit erfolgt ein unwiderrufliches Verbinden der beiden Bestandteile. Alternativ kann auch ein Zusammenfügen der Bilddatei 26 und der Unterschrift 18 in einer gemeinsamen Datei erfolgen. Eine digitale Signatur 34 kann nicht nur in diesem Fall für eine Sicherung gegen Veränderungen sorgen. Nachträgliche Veränderungen an der durch Hinzufügen der Unterschrift 18 individualisierten und anschließend signierten Bilddatei 26 führen typischerweise zu einer Ungültigkeit der Signatur 34 und können somit leicht erkannt werden.

Das Programm 24 hat typischerweise Zugriff auf einzelne Bilddateien 26 oder ganze Bilddateiserien von Sportlern. Dies ist analog zu dem in Fig. 1 dargestellten Stapel von Autogrammkarten 10 zu sehen. Trifft ein Fan auf einen Sportler, kann er das Programm 24 starten, die Bilddatei 26 des Sportlers auf dem Bildschirm 30 des Smartphones 22 darstellen lassen und den Sportler bitten, sein Bild 12 eigenhändig zu signieren. Dies geschieht entweder mit dem Finger oder einem Stift 32, der für die Dateneingabe auf berührungsempfindlichen Displays 30 geeignet ist.

Datums-, Orts- und Zeitinformationen des Zeitpunkts und Orts der Unterzeichnung beziehungsweise Signatur durch den Sportler können außerdem mit der Bilddatei 26 verknüpft beziehungsweise in diese eingebettet werden. Hierzu können beispielsweise zentrale Zeitgeber beziehungsweise Positionsangaben eines Mobilfunknetzes oder auch ein GPS oder ähnlichem ausgelesen werden.

Alternative Identitätszeichens und deren Eingabemöglichkeiten kommen ebenfalls in Betracht. Der Sportler kann sich beispielsweise allein oder auch zusammen mit dem Fan fotografieren lassen. Ein solches Foto, das mit der in das Mobiltelefon 22 eingebauten Kamera aufgenommen wird, unterstreicht nochmals die Authentizität der Situation und gibt dem Autogramm eine zusätzliche persönliche Note. Weitere Möglichkeiten der Signierung stellen unter anderem ein Scan der Iris eines Auges, ein Fingerabdruck oder ähnliche Merkmale des Sportlers dar. Es ist beispielsweise auch eine Kombination verschiedener Eingabemöglichkeiten denkbar. Entsprechende Eingabegeräte können dazu in das Smartphone 22 integriert oder daran angeschlossen sein. Als Eingabegeräte können beispielsweise Kameras, berührungsempfindliche Sensoren oder ähnliches verwendet werden.

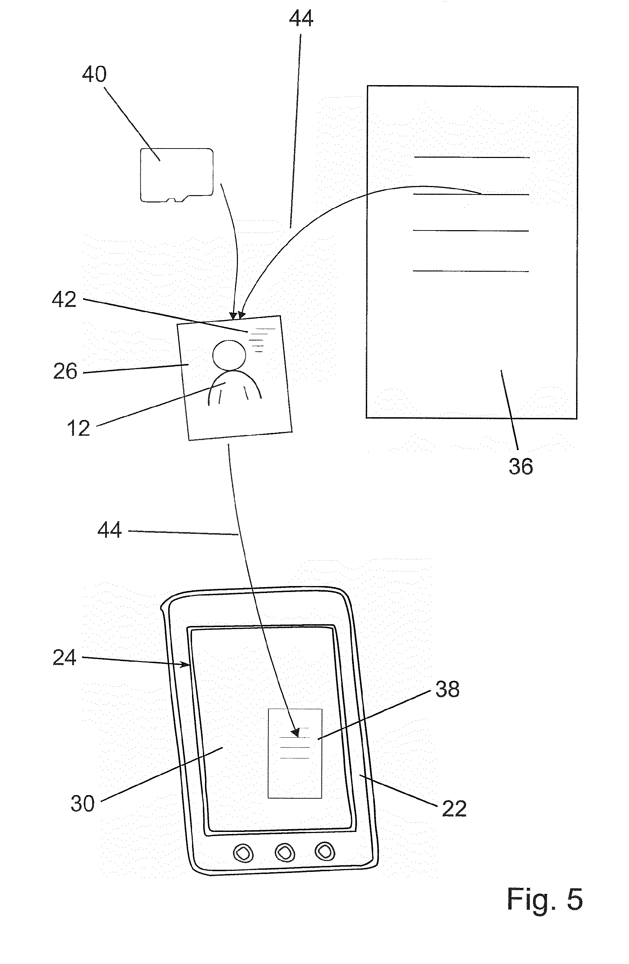

Die Bilddateien, die der Fan in seinem Mobiltelefon 22 vorhält, erwirbt er typischerwiese vorab von einem entsprechenden Anbieter. Dies kann beispielsweise ein Sportverein, wie beispielsweise ein Fußballverein, oder auch ein zentraler Anbieter für verschiedene Vereine oder Sportler sein. Der Verein kann dem Bild, wie in Fig. 2 beziehungsweise Fig. 5 dargestellt ist, eigene Informationen hinzufügen, beispielsweise ein Vereinslogo 16 oder auch Werbemitteilungen 42. Um die unerlaubte Weitergabe oder Vervielfältigung der Bilddatei zu verhindern, können dem Bild eindeutige, dem Fan zugeordnete Markierungen hinzugefügt werden. Fig. 7 zeigt, sinnbildlich dargestellt, ein Wasserzeichen, welches die Echtheit des Bildes bestätigt. Alternativ kann ein dem Fan zugeordneter, öffentlicher digitaler Schlüssel, zu dem der private Schlüssel beim Anbieter vorliegt, in das Bild eingebettet werden. Diese Kombination digitaler Schlüssel sorgt für eine eindeutige und fälschungssichere Zuordnung der Bilddatei zum Fan. Auch denkbar ist die Einbettung eines digitalen Hashwertes vom Kennwort des Fans, welches dieser beim Anbieter hinterlegt.

Da es unter Sportfans üblich ist, Autogrammkarten untereinander zu tauschen, wird diese Möglichkeit auch für die digitalen Bilddateien vorgesehen. Sobald ein Fan seine Datei an einen anderen Fan überträgt, wird die digitale Markierung der Bilddatei geändert. Die Datei wird so eindeutig dem neuen Besitzer zugeordnet und der ursprüngliche Besitzer kann sie nicht mehr benutzen.

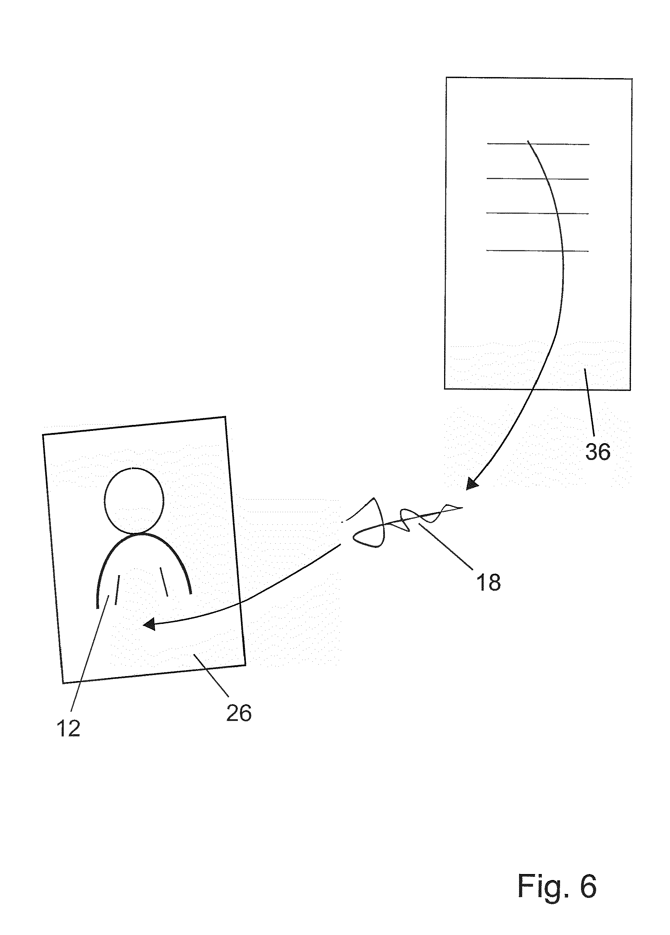

Fig. 2 und 6 zeigen zwei verschiedene Möglichkeiten für einen Fan, die Bilddatei 26, also seine digitale Autogrammkarte 10, mittels einer Signatur eines Sportlers zu einem Unikat zu machen. Der übliche Weg ist das Erlangen einer Signatur durch die althergebrachte "Autogrammjagd" gemäß Fig. 2 oder Fig. 3. Der Fan versucht dazu mit dem Sportler persönlich in Kontakt zu treten, so dass dieser sein Bild beziehungsweise die Bilddatei 26 signiert. Falls der Fan sich außerstande sieht, auf diese Weise die Unterschrift 18 eines Sportlers zu erhalten, kann er von einem Anbieter alternativ eine Original-Signatur erwerben, die der Sportler dazu vorab "blanko" erzeugt hat, um sie der digitalen Autogrammkarte 10 in Form der Bilddatei 26 hinzuzufügen. Dieser in Fig. 6 gezeigte alternative Weg gibt einem Fan die Möglichkeit, seine Sammlung dennoch zu vervollständigen. Hierbei wird beispielsweise durch eine Zertifizierung der digitalen Unterschrift 18 sichergestellt, dass es sich um ein Original handelt. Allerdings kann auch ein Hinweis auf diese nicht durch direktes Unterzeichnen erhaltene komplette digitale Autogrammkarte 10 in der Bilddatei 26 vorhanden sein. Dies erfolgt, da möglicherweise Wertunterschiede bei den Sammlern bestehen.

In Fig. 5 ist dargestellt, wie digitale Autogrammkarten 10 oder eine Serie derselben, von einem Anbieter bezogen werden können. Die entsprechenden Bilddateien 26 werden von einer Datenbank 36, die ein entpsrechender Anbieter, wie beispielsweise ein Verein oder Dienstleister betreibt, über ein Netzwerk 44, beispielsweise das Internet, auf das Smartphone 22 des Fans heruntergeladen. Es ist denkbar, daß ein Fan ein entsprechendes Programm 24, also eine Software beziehungsweise App, auf seinem Mobiltelefon 22 installiert und mit Hilfe dieser App, die sich mit der Datenbank 36 des Anbieters verbindet, die gewünschten digitalen Autogrammkarten 10 bezieht. Die Software kann so programmiert sein, dass sie auch den Bezahlvorgang für den Bezug der Autogrammkarten 10 vornimmt.

Auch kann die App bereits alle vom Anbieter angebotenen digitalen Autogrammkarten 10 als Bilddateien 26 enthalten. Dazu ist auf dem Mobiltelefon 22 beziehungsweise im Programm 24 eine entsprechende Datenbank 38 vorhanden. Die Bilddateien 26 sind dann zunächst gegen den Zugriff seitens des Anwenders (des Fans) geschützt. Erst nach einer Freischaltung, für die der Fan bezahlt, kann er einzelne oder mehrere digitale Autogrammkarten 10 nutzen und signieren lassen.

Zusätzlich ist die App so eingerichtet, dass sie sich mit der Datenbank 36 des Herstellers verbindet, um Informationen über vom Fan bereits erhaltene Unterschriften 18 als Signaturen oder zwischen Fans getauschte Autogrammkarten 10 mit der Datenbank 36 zu synchronisieren. Diese Informationen können in einer weiteren Ausbildung der Erfindung dazu genutzt werden, den Fans eines Vereins eine digitale Plattform zum Austausch zu bieten. So kann ein Internet-Forum oder ein soziales Netzwerk eingerichtet werden, in dem Fans miteinander über ihre Idole diskutieren, Autogrammkarten 10 tauschen oder sich für Veranstaltungen verabreden.

Eine weitere Möglichkeit, digitale Autogrammkarten 10 und das zugehörige Verwaltungs- und Signierungsprogramm von einem Anbieter zu beziehen, ist ebenfalls in Fig. 5 dargestellt. Der Fan erwirbt dazu eine Speicherkarte 40, beispielsweise eine SD-Card, von einem Anbieter und baut diese in sein Smartphone 22 ein. Nun kann er die auf der Speicherkarte 40 installierte App starten, welche auf die Bilder beziehungsweise Bilddateien 26 zugreift, die ebenfalls auf der Karte 40 gespeichert sind. Die Speicherkarte 40 kann vom Fan auch genutzt werden, seine Daten mit dem Anbieter zu synchronisieren. Dafür hält dieser vergleichbar mit Fotodruckern, die man häufig in Einzelhandelsgeschäften zum kostenpflichtigen Ausdrucken von Fotos findet, entsprechende Lesegeräte vor. Der Fan hat nun die Möglichkeit, an einem solchen Lesegerät seine Speicherkarte 40 einzustecken und die Daten seines Benutzerkontos beim Anbieter zu aktualisieren. Zusätzlich kann das das Lesegerät die Möglichkeit bieten, die digitalen Autogrammkarten 10 auszudrucken, so dass sie auch ohne Smartphone 22 in Papierform präsentiert werden können.

### Bezugszeichenliste:

- 10: Autogrammkarte
- 12: Foto
- 14: Name
- 16: Logo
- 18: Unterschrift
- 20: Stift
- 22: Mobiltelefon
- 24: Programm
- 26: Bilddatei
- 28: Wasserzeichen
- 30: Touchscreen
- 32: Eingabestift
- 34: Signatur
- 36: Datenbank
- 38: Datenbank
- 40: Speicherkarte
- 42: Werbemitteilung
- 44: Netzwerk

## Patentansprüche

1. Verfahren zum Individualisieren einer elektronischen Bilddatei (26), wobei die elektronische Bilddatei (26) wenigstens ein Foto (12) wenigstens einer Person enthält, wobei die Individualisierung insbesondere auf einem mobilen Endgerät erfolgt, **dadurch gekennzeichnet, dass** mittels einer Eingabevorrichtung wenigstens ein Identitätszeichen der wenigstens einen abgebildeten Person eingelesen und dass das wenigstens eine Identitätszeichen mit der Bilddatei (26) zu einem Unikat verbunden wird.

2. Verfahren nach Anspruch 1, **dadurch gekennzeichnet, dass** als Identitätszeichen ein graphisch erfassbares und/oder darstellbares Merkmal der Person verwendet wird.

3. Verfahren nach Anspruch 1 oder 2, **dadurch gekennzeichnet, dass** als Identitätszeichen der Person eine insbesondere handschriftlich abgegebene Unterschrift (18), ein Fingerabdruck, eine Irisaufnahme, ein Foto und/oder ein ähnliches individuelles Merkmal der Person verwendet wird, wobei bevorzugt eine Eingabevorrichtung zum Einlesen eines insbesondere graphisch darstellbaren Identitätszeichens verwendet wird, insbesondere ein berührungsempfindlicher Bildschirm (30), eine Computermaus, ein vorzugsweise berührungsempfindliches Sensorfeld, beispielsweise ein Touchpad oder Grafiktablett, und/oder eine Kamera.

4. Verfahren nach einem der vorhergehenden Ansprüche, **dadurch gekennzeichnet, dass** das Identitätszeichen dauerhaft mit der Bilddatei (26) verbunden wird, wobei das Identitätszeichen insbesondere in die Bilddatei (26) eingebettet wird und/oder wobei vorzugsweise einzelne Bildbestandteile, wie insbesondere einzelne oder mehrere Bildpunkte, durch zumindest Teile des Identitätszeichen ersetzt werden.

5. Verfahren nach einem der vorhergehenden Ansprüche, **dadurch gekennzeichnet, dass** in die Bilddatei (26) weitere Informationen eingebettet werden beziehungsweise worden sind, insbesondere Zusatzinformationen eines Dritten, beispielsweise eines Erstellers und/oder Anbieters der Bilddatei (26), besonders bevorzugt zusätzliche individualisierende Merkmale, wie Identitätszeichen, Schriftzüge, Bildbestandteile, Logos (16) und/oder ähnliches, und/oder dass die Bilddatei (26) durch ein Foto (12) einer weiteren Person gemeinsam der wenigstens einen abgebildeten Person ergänzt Wird.

6. Verfahren nach einem der vorhergehenden Ansprüche, **dadurch gekennzeichnet, dass** die Bilddatei (26) mit einer digitalen Markierung versehen wird, beispielsweise einem digitalen Wasserzeichen (28), einem digitalen Schlüssel und/oder einer Prüfsumme, wie einem Hashwert, und/oder Kombinationen daraus, wobei die Bilddatei (26) bevorzugt einem Computersystem und/oder einem Benutzerkonto und/oder einer Person, bevorzugt einem Eigentümer, eindeutig zugeordnet wird, insbesondere mittels einer Datenbank (36), und/oder wobei die digitale Markierung der Bilddatei (26) und/oder ein Datenbankeintrag jederzeit derart verändert werden kann, dass die Bilddatei (26) einem anderen Eigentümer zugeordnet wird.

7. Verfahren nach einem der vorhergehenden Ansprüche, **dadurch gekennzeichnet, dass** das Identitätszeichen bevorzugt direkt und/oder unmittelbar von der Person zur insbesondere zumindest nahezu sofortigen Individualisierung der Bilddatei (26) abgegeben und/oder mittels der Eingabevorrichtung eingelesen wird, und/oder dass ein individualisiertes, vorzugsweise mit einer eindeutigen digitalen Markierung versehenes Identitätszeichen aus der Datenbank (36) heruntergeladen und zur Individualisierung verwendet wird.

8. Verfahren nach einem der vorhergehenden Ansprüche, **dadurch gekennzeichnet, dass** die Bilddatei (26), vorzugsweise zumindest die digitale Markierung der Bilddatei (26) und/oder das in der Bilddatei (26) eingebettete Identitätszeichen der abgebildeten Person, in wenigstens einer Datenbank (36; 38) gespeichert werden, vorzugsweise in einer Datenbank (36; 38) innerhalb und/oder außerhalb des Endgerätes.

9. Verfahren nach einem der vorhergehenden Ansprüche, **dadurch gekennzeichnet, dass** die Verfahrensschritte mit Hilfe einer Software beziehungsweise eines Programms (24) zum Herunterladen und/oder Manipulieren und/oder Verwalten von Bilddateien (26) ausgeführt werden, wobei die Software auf dem Endgerät installiert wird, wobei die Bilddatei (26) aus einer Datenbank (36) auf das Endgerät geladen wird, wobei die Verbindung des Gerätes zur Datenbank (36) über ein Netzwerk (44) erfolgt, und/oder wobei die Software eine Datenbank (38) enthält und/oder eine Anbindung an eine externe Datenbank (36).

10. Verfahren nach einem der der vorhergehenden Ansprüche, **dadurch gekennzeichnet, dass** die Bilddatei (26) sich auf einem internen und/oder externen Speichermedium, beispielsweise einem Festspeicher oder einer Speicherkarte (40), wie einer SD-Card oder ähnlichem, befindet, und/oder dass die Bilddatei (26) fest im Datenbestand eines zu erwerbenden Programmproduktes zur Ausführung des Verfahrens integriert ist.

11. Bilddatei, vorzugsweise individualisiert durch ein Verfahren gemäß einem der Ansprüche 1 bis 10, mit wenigstens einem Foto (12) wenigstens einer Person, **dadurch gekennzeichnet, dass** die Bilddatei (26) durch Verbindung mit wenigstens einem Identitätszeichen der wenigstens einen abgebildeten Person zu einem Unikat verwandelt wird.

12. Bilddatei nach Anspruch 11, **dadurch gekennzeichnet, dass** das Identitätszeichen ein graphische erfassbares, insbesondere eindeutiges Merkmal einer Person ist, wobei es sich vorzugsweise um eine digitalisierte, insbesondere handschriftliche Unterschrift, einen Fingerabdruck und/oder ein Foto handelt, und/oder dass das Identitätszeichen vorzugsweise dauerhaft mit der Bilddatei verbunden ist, wobei das Identitätszeichen insbesondere in die Bilddatei eingebettet ist und/oder wobei vorzugsweise einzelne Bildbestandteile, wie insbesondere einzelne oder mehrere Bildpunkte, durch zumindest Teile des Identitätszeichen ersetzt sind.

13. Bilddatei nach Anspruch 11 oder 12, **dadurch gekennzeichnet, dass** die Bilddatei (26) eine eindeutige digitale Markierung zur Zuordnung zu einem Computersystems, einem Benutzerkonto und/oder einer Person aufweist, beispielsweise ein digitales Wasserzeichen (28), einem digitalen Schlüssel, einem Hashwert und/oder Kombinationen daraus, wobei die Bilddatei (26) bevorzugt einem Computersystem und/oder einem Benutzerkonto und/oder einer Person zugeordnet ist, insbesondere mittels wenigstens einer Datenbank (36, 38).

14. Programmprodukt, insbesondere Computerprogrammprodukt, zur Ausführung eines Verfahrens insbesondere nach einem der Ansprüche 1 bis 10, wenn es auf einer programmtechnisch eingerichteten Datenverarbeitungsanlage abläuft, insbesondere Computersystem, einem Mobiltelefon (22), einem Tabletcomputer, einem Laptop und dergleichen.

15. Datenverarbeitungsanlage zur Ausführung des Verfahrens nach einem der Ansprüche 1 bis 11 mit einem in einem der Datenverarbeitungsanlage zugeordneten Speicher hinterlegten Programmprodukt nach Anspruch 14.
